Europäisches Patentamt

European Patent Office

Office européen des brevets

(19)

(11) Veröffentlichungsnummer: **0 276 367**

**A2**

(12) **EUROPÄISCHE PATENTANMELDUNG**

(21) Anmeldenummer: **87113661.0**

(51) Int. Cl.⁴ **B29C 61/00**

(22) Anmeldetag: **18.09.87**

(30) Priorität: **24.01.87 DE 3702081**

(43) Veröffentlichungstag der Anmeldung:
**03.08.88 Patentblatt 88/31**

(84) Benannte Vertragsstaaten:
**AT BE CH DE ES FR GB GR IT LI LU NL SE**

(71) Anmelder: **Kabelmetal electro Gesellschaft mit beschränkter Haftung**
**Kabelkamp 20 Postfach 260**
**D-3000 Hannover 1(DE)**

(72) Erfinder: **Voigt, Hermann Uwe, Dr.rer.nat.**
**Seilerstrasse 49**
**D-3060 Stadthagen(DE)**

(54) Verfahren zur Herstellung von Schrumpfartikeln.

(57) Bei der Herstellung von durch Wärmezufuhr - schrumpfenden Artikeln, wie Schläuche, Kappen, Bänder und dergl., aus nach Aufpfropfen von Silanen durch Feuchtigkeitseinwirkung vernetzenden thermoplastischen oder elastomeren Werkstoffen, werden diese Werkstoffe in der Formgebungsphase teil-oder anvernetzt.

Die vorliegende Erfindung betrifft ein Verfahren zur Herstellung von durch Wärmezufuhr - schrumpfenden Artikeln, wie Schläuche, Kappen, Bänder und dergl., aus nach Aufpfropfen von Silanen durch Feuchtigkeitseinwirkung vernetzenden thermoplastischen oder elastomeren Werkstoffen.

Ein solches Verfahren ist bereits bekannt (DE-OS 2 940 719), durch die Aufpfropfung reaktionsfähiger niedermolekularer Verbindungen. z. B. von Organosilanen, als Vernetzungshilfsmittel auf die Makromoleküle der Basismaterialien, die ihrerseits im Verlauf von Sekundärreaktionen zu einer polyfunktionellen Kettenverknüpfung führen, bilden sich bündelartige Vernetzungsstellen, wobei über einen Vernetzungsknoten gleichzeitig mehrere Makromoleküle aneinander fixiert sind. Dieser besondere chemische Vernetzungsmechanismus führt zu hohen Bindungskräften im Molekularbereich, die bei Erwärmung im thermoplastischen Zustand zwar gelockert und damit eine Aufweitung z. B. des Formlings gestatten, nach einer Wiedererwärmung und raschen Schrumpfung aber ihre ursprüngliche Gestalt wieder einnehmen.

Auch aus solchen Materialien hergestellte Schrumpfartikel haben demnach ein "elastisches Formgedächtnis", sie sind daher für beliebige Einsatzmöglichkeiten, z. B. als Schläuche und Kappen, etwa für den druckdichten und feuchtigkeitsfesten Abschluß der Enden elektrischer Kabel, oder als Manschetten, ein-oder mehrteilig, zum Schutz von Anschluß-oder Verbindungsstellen elektrischer Kabel oder auch Rohrbündelkabel geeignet.

Die Qualität von technischen Profilen, also auch der angesprochenen Schrumpfartikel, aus thermoplastischen oder elastomeren Werkstoffen, ihre Gebrauchseigenschaften und ihr Verhalten im Betrieb werden neben den grundsätzlichen Werkstoffeigenschaften maßgeblich durch die morphologische Struktur des jeweiligen Materials bestimmt. Letztere Eigenschaften sind vor allem durch die Formgebungsbedingungen beim Herstellungsprozeß beeinflußbar, wie u. a. durch molekulare Orientierungen, durch die Fließbedingungen im Ausformbereich und die Kristallinität durch unterschiedliche Abkühlgeschwindigkeiten. Im allgemeinen sind solche molekularen Orientierungen bei der Herstellung von Kunststoffartikeln unerwünscht, bei der Herstellung der beschriebenen Schrumpfartikel können als Folge hiervon die bekannten Längsdehnungen beim Rückschrumpfen auftreten, die zu vermeiden bereits unterschiedliche Vorschläge unterbreitet worden sind.

Der Erfindung liegt von daher die Aufgabe zugrunde, die Qualität von aus feuchtigkeitsvernetzbaren Werkstoffen hergestellten Schrumpfartikeln weiter zu verbessern, insbesondere eine Längsänderung der Formteile beim Schrumpfvorgang zu vermeiden bzw. auf einen vernachlässigbaren Wert zu reduzieren und die Aufweitfähigkeit der Formteile zu erhöhen.

Gelöst wird diese Aufgabe gemäß der Erfindung dadurch. daß die Werkstoffe in der Formgebungsphase teil-oder anvernetzt werden. Dabei beruht die Erfindung auf der Erkenntnis, daß im Falle von Schrumpfartikeln durch molekulare Orientierungen bei der Herstellung dieser Formteile bedingte Anisotropien der inneren Eigenschaften des Formteiles gerade von Vorteil sind. Tritt nämlich, wie nach der Erfindung vorgesehen, in der Formgebungsphase eine Teil-oder Anvernetzung des Werkstoffes ein, werden wünschenswerte innere Eigenschaften, die auf orienterungsbedingte Anisotropien vom Formgebungsprozeß zurückzuführen sind, durch die kontrollierbare Vor-oder Teilvernetzung fixiert, d. h. die sog. Relaxation bzw. Retardation der Molekülorientierung wird eingeschränkt.

In Weiterführung der Erfindung hat es sich als besonders vorteilhaft erwiesen, wenn die für die Teil-oder Anvernetzung erforderliche Feuchtigkeitsmenge in der Formgebungsphase aus dem auf Formgebungstemperatur befindlichen Werkstoff freigesetzt wird. Dabei wird die für die Teil-, Vor-oder Anvernetzung erforderliche Feuchtigkeitsmenge zweckmäßig aus den Füllstoffen als Feuchtigkeitsträger gewonnen.

Beliebige Mischungen lassen sich entsprechend der Erfindung einsetzen, sofern auf diese Materialien Silane pfropfbar und damit der Werkstoff durch Einwirkung von Feuchtigkeit vernetzbar gemacht worden ist. Eine für Schrumpfartikel besonders geeignete Mischung besteht jedoch aus einem Polyethylen hoher Dichte und Kristallinität und einem Copolymeren des Ethylens sowie einem oder mehreren im Bereich von 160° - 240° C Wasser abspaltenden Füllstoffen. Geeignete Mischungskomponenten sind in diesem Zusammenhang z. B. ein lineares Polyethylen mit einer Dichte $\rho \geq 0,94$ sowie ein Ethylen-Copolymerisat mit 10-20 Gew.% Vinylacetat oder Acrylat. Durch eine speziell wählbare Mischungszusammensetzung und durch die nach der Erfindung geringe Vorvernetzung, die sich vielfach nur in einem Viskositätssprung zu erkennen gibt, beispielsweise in einer Schmelzindexänderung von 0,5 auf 0,05, wird erreicht, daß sich die während der Formgebungsphase eingebrachten molekularen Orientierungen nicht ganz, sondern nur teilweise abbauen können, weil die Relaxation durch die Vernetzung erschwert bzw. behindert ist.

Normalerweise erfolgt die Relaxation am Formteil mit einer von der Temperatur abhängigen relativ hohen Geschwindigkeit unmittelbar nach dessen Austritt aus dem Mundstück des Formgebungsextruders. Auch bei der anschließenden Lagerung des Formteiles im unvernetzten Zustand kommt es zu einem weiteren Abbau von molekularen Orientierungen, allerdings mit geringer Geschwindigkeit. Wenn aber entsprechend der Erfindung durch dosierte Wasserabgabe aus dem Füllstoff noch während der Formgebungsphase eine zwar geringe, jedoch gezielte Vernetzung erreicht wird, kann dieser Relaxations-bzw. Orientierungsabbau verhindert bzw. eingeschränkt werden. Der durch die nach der Erfindung vorgenommene Teil-, Vor-oder Anvernetzung erzielte Vernetzungsgrad ist dabei so gering, daß zwar die Relaxation weitgehend verhindert ist, das Fließverhalten der Polymerschmelze in der Ausformzone aber so wenig gestört ist, daß noch glatte Oberflächen und gute Extrudatqualitäten erreicht werden.

Als wasserabspaltende Füllstoffe haben sich in Durchführung der Erfindung feinteilige, nichthygroskopische Ruße als zweckmäßig erwiesen, etwa Acetylen-Ruße, wie sie unter den Handelsnamen Noir Y 2000 oder Shavinigan bekannt sind.

Bei der Herstellung von Formteilen aus feuchtigkeitsvernetzbaren Werkstoffen, etwa von Vorformprofilen, die in nachgeschalteten Arbeitsgängen zu schrumpffähigen Manschetten bzw. Muffen weiterverarbeitet werden, kann der die Relaxation des Formteiles behindernde, nach der Erfindung praktizierte Vorvernetzungseffekt in mehrfacher Hinsicht vorteilhaft ausgenutzt werden. Bei vielen wärmeschrumpfenden Formteilen, z. B. Schläuchen und Manschetten, ist es wünschenswert, daß bei Schrumpfen keine bzw. kaum eine Längsänderung der Geometrie (Verkürzung in Extrusionsrichtung) eintritt, wohl aber eine starke Dimensionsveränderung quer zur Extrusionsrichtung. Diese wünschenswerte Verhalten wird z. B. bei Manschetten dadurch erreicht, daß die bei der Extrusion des Vorformlingprofils zwangsläufig erhaltene Längsorientierung der Moleküle, d. h. die vorzugsweise Ausrichtung in Extrusionrichtung, nach der Erfindung zum Teil bzw. sogar weitgehend erhalten bleibt. Das Ergebnis ist, daß die Manschette einer Verformung in Längsrichtung relativ großen Widerstand entgegensetzt, aber in Querrichtung relativ leicht und bis zu hohen Expansionsfaktoren (600 - 800 %) aufgeweitet werden kann.

Bei der Herstellung von Schrumpfschläuchen kann dieser Effekt ebenfalls vorteilhaft ausgenutzt werden. Die bei der Extrusion des Vorformlingrohres erhaltene Längsorientierung wird im allgemeinen durch Relaxation unmittelbar nach dem Mundstück und während der Abkühlphase mehr oder weniger abgebaut. Wenn aber die Längsorientierung durch ein unmittelbar während der Ausformphase gebildetes sogenanntes Vorvernetzungsnetzwerk eingefangen wird, erhält das Rohr eine Verfestigung in axialer Richtung, die sich vor allem im thermoelastischen Zustand auswirkt und die spätere unerwünschte Längsdehnung im Expansionsschritt verhindert, demgegenüber aber die erwünschte radiale bzw. Querexpansion begünstigt und hohe Expansionsraten gestattet.

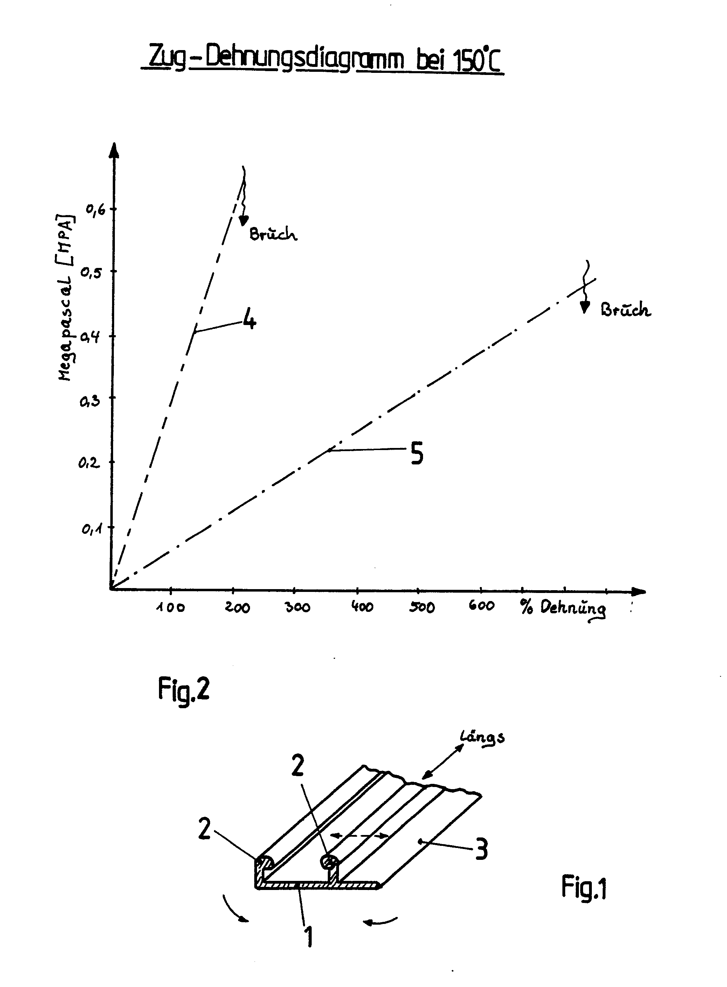

Die Erfindung sei an Hand der nachstehenden Mischungsbeispiele sowie des in den Fig. 1 und 2 als Ausführungsbeispiel behandelten schrumpffähigen, zu einer Manschette verformbaren Bandes näher erläutert.

Beispiel I

Lineares Polyethylen höherer Dichte ($\rho \geq 0,94$; MFI 190/2,16 : 0,2 - 0,6)     40 - 60 Teile
Ethylen-Copolymerisat vom Typ Ethylen-Vinylacetat (EVA) oder Ethylen-Ethylacrylat (EEA) mit 10 - 20 Gew.% Vinylacetat-bzw. Acrylat-Gehalt     30 - 40 Teile
Acetylenruß     5 - 15 Teile
Dispersions-und Verarbeitungshilfsmittel (z. B. Ca-Stearat)     0,1 Teile
Alterungs-und Oxidationsschutz (z. B. 2,2,4-Trimethyl-dihydrochinolin)     0,5 Teile

Zu dieser Grundmischung erfolgt die Zugabe der Vernetzungschemikalien, etwa in folgender Form:
Grundmischung (s.o.)     100 Teile
Vinyltrimethoxi-oder Vinyltriethoxisilan     0,8 - 1,2 Teile
Radikalinitiator (Peroxid)     0,02 - 0,06 Teile
Katalysator (Dibutylzinndilaurat)     0,05 Teile

Eine weitere zweckmäßige Mischungszusammensetzung zeigt das

Beispiel II Lineares Polyethylen höherer Dichte ($\rho \geq 0,94$; MFI 190/2,16 ca. 0,2 Kristallinität 60 %)     50 Teile
Ethylen-Vinylacetat-Copolymer (EVA) ($\rho$ = 0,93 - 0,94, Vinylacetat-Gehalt 10-18 Gew.%, Kristallinität 20-30 %     25 Teile
Rußbatch aus 35 Gew.-% Acetylenruß, dispergiert in Ethylen-Butylacrylat-Copolymeren bzw. Ethylen-Ethylacrylat     25 Teile
Oxidations-und Alterungsschutzmittel (2,2,4-Trimethyldihydro-Chinolin)     0,5 Teile
Verarbeitungshilfsmittel     0,1 Teile

Zu dieser Grundmischung werden die Vernetzungschemikalien zudosiert, so daß sich die folgende, in den Extrudertrichter z. B. einzuführende vernetzungsfähige Mischung ergibt:
Grundmischung (s.o.)     100 Teile
Vinyltrimethoxisilan     0,5 - 1,0 Teile
Peroxid (z. B. Dicumylperoxid)     0,01-0,05 Teile
Katalysator (Dibutylzinndilaurat)     0,05 Teile

Ein aus der Mischung I oder II nach Aufpfropfen der Silanverbindungen hergestelltes Formteil zeigt die Fig. 1. Es handelt sich hierbei um ein Band 1, das längsangeformte Verschlußrippen 2 und einen zusätzlichen seitlich angeordneten Dichtstreifen 3 aufweist. Dieses Band wird nach der Extrusion und Vernetzung des Werkstoffes quer zur Extrusionsrichtung zum Zwecke des Rückschrumpfens gereckt und in diesem gerechten Zustand, wie durch Pfeile angedeutet, um den zu - schützenden Gegenstand herumgelegt und mittels der Rippen 2 verschlossen, wobei der Dichtstreifen 3 unter die Verschlußkante zu liegen kommt. Durch Anwendung von Wärme wird die so hergestellte Manschette auf den zu schützenden Gegenstand heruntergeschrumpft.

Zum Nachweis des gemäß der Erfindung erzielten Effektes wurden aus einem Band entsprechend Fig. 1 zwei Proben ausgestanzt, einmal in Längsrichtung des Bandes und einmal quer hierzu. Diese Proben wurden anschließend einer Zugkraft ausgesetzt, das bei 150° C aufgenommene Zug-Dehnungsdiagramm veranschaulicht die Fig. 2.

Die Kurve 4 im Zug-/Dehnungsdiagramm zeigt die Abhängigkeit der deformierenden Kraft als Funktion der Verformung bei der in Längsrichtung bzw. in Extrusionsrichtung d. h. quer zur Expansionsrichtung ausgestanzten Probe.

Wie diesem Diagramm zu entnehmen, ist zur Erzielung einer bestimmten Verformung eine relativ große Krafteinwirkung erforderlich. Die Bruchdehnung liegt im Bereich von 150 - 200 %. Die Kurve 5 zeigt das Verhalten einer quer zur Extrusionsrichtung d. h. in Expansionsrichtung ausgestanzten Probe, aufgenommen unter den gleichen Bedingungen wie bei der in Extrusionsrichtung ausgestanzten Probe. Wie aus dem Diagramm ersichtlich, läßt sich die quer zur Extrusionsrichtung ausgestanzte Probe wesentlich leichter, d. h. mit geringerer Krafteinwirkung und bis zu sehr hohen Dehnungen (ca. 800%) expandieren.

Für den praktischen Einsatz solcher Formteile bedeutet dies, die Manschette (Fig. 1), ein Schrumpfschlauch oder ein sonstiges nach der Erfindung hergestelltes Schrumpfformteil, zeigen geringe Neigung zu unerwünschten Geometrieänderungen in Längsrichtung, sie sind aber quer zur Extrusionsrichtung bis zu hohen Schrumpfraten, nämlich um den Faktor 6 bis 10, expandierbar.

**Ansprüche**

1. Verfahren zur Herstellung von durch Wärmezufuhr schrumpfenden Artikeln, wie Schläuche, Kappen, Bänder und dergl., aus nach Aufpfropfen von Silanen durch Fuechtigkeitseinwirkung vernetzenden thermoplastischen oder elastomeren Werkstoffen, dadurch gekennzeichnet, daß die Werkstoffe in der Formgebungsphase teil-oder anvernetzt werden.

2. Verfahren nach Anspruch 1, dadurch gekennzeichnet, daß die für die Teil-oder Anvernetzung erforderliche Feuchtigkeitsmenge in der Formgebungsphase freigesetzt wird.

3. Verfahren nach Anspruch 1 oder 2, dadurch gekennzeichnet, daß die für die Teil-oder Anvernetzung erforderliche Feuchtigkeitsmenge aus den Füllstoffen gewonnen wird.

4. Mischung zur Durchführung des Verfahrens nach Anspruch 1 oder einem der folgenden, gekennzeichnet durch einen Verschnitt aus einem Polyethylen hoher Dichte und Kristallinität und einem Copolymeren des Ethylens sowie einem oder mehreren im Bereich von 160° - 240° C Wasser abspaltenden Füllstoffen.

5. Mischung nach Anspruch 4, dadurch gekennzeichnet, daß das Polyethylen hoher Dichte ein lineares Polyethylen mit einer Dichte $\rho \geq 0,94$ ist.

6. Mischung nach Anspruch 4 oder 5, dadurch gekennzeichnet, daß das Copolymere des Ethylens ein Ethylen-Copolymerisat mit 10-20 Gew. % Vinylacetat oder Acrylat ist.

7. Mischung nach Anspruch 4, dadurch gekennzeichnet, daß als wasserabspaltende Füllstoffe Ruße verwendet sind.

8. Mischung nach Anspruch 7, dadurch gekennzeichnet, daß als Ruß ein Acetylenruß verwendet ist.

## Zug-Dehnungsdiagramm bei 150°C

**Fig.2**

**Fig.1**